# EUROPÄISCHE PATENTANMELDUNG

(11) **EP 0 846 522 A2**
(43) Veröffentlichungstag der Anmeldung: **10.06.1998**
(21) Anmeldenummer: 97120355.9
(22) Anmeldetag: 20.11.1997
(51) Int. Cl.: B23K 35/30, B23K 23/00, B23K 35/34

(54) **Aluminothermisches Gemisch**

(30) Priorität: 04.12.1996 DE 19650207
(71) Anmelder: Elektro-Thermit GmbH, D-45139 Essen (DE)
(72) Erfinder: Frommeyer, Georg, Prof. Dr., 40699 Erkrath (DE); Kulse, Michael, 46147 Oberhausen (DE); Mulder, Gerhardus Johannes, 45133 Essen (DE); Steinhorst, Michael, Dr., 45355 Essen (DE)
(74) Vertreter: Rotenberg, Klaus, Dr.

(57) **Zusammenfassung**

Die Erfindung betrifft ein aluminothermisches Gemisch aus einer feinteiligen Basisportion aus Eisenoxiden und Aluminium sowie metallischen Zuschlägen, wobei als metallischer Zuschlag eine Vorlegierung, nämlich eine Ferro-Chrom-Legierung, die aus (in Gew.-%)

| | |
|---|---|
| C: | 0,1 bis 20 |
| Si: | 2 bis 40 |
| Cr: | 5 bis 80 |

und Eisen mit herstellungsbedingten Verunreinigungen sowie gegebenenfalls sonstigen Legierungselementen besteht, in einer Menge von 5 bis 50 Gew.-% bezogen auf die Basisportion zugesetzt wird.

## Beschreibung

Die Erfindung betrifft ein aluminothermisches Gemisch aus einem körnigen Gemenge von Eisenoxiden, Aluminium und Zusatzstoffen, wie Legierungsbildner und Dämpfungsmittel.

Die Erfindung betrifft insbesondere ein aluminothermisches Gemisch für die Verbindungsschweißung von Schienen.

Bei der bekannten aluminothermischen Schienenverbindungsschweißung, bei der die mit einer Lücke verlegten und mit einer Gießform umgebenen Schienenenden durch aluminothermisch erzeugten Stahl aufgeschmolzen und miteinander verbunden werden, soll der als Schweißgut dienende aluminothermisch erzeugte Stahl in seinen Festigkeitseigenschaften dem Schienenstahl möglichst entsprechen.

Dieser Forderung tragen die bekannten - auch Schweißportionen genannten - aluminothermischen Gemische dadurch Rechnung, daß dem aus Aluminium und Eisenoxiden bestehenden Basisgemisch Legierungselemente, wie insbesondere Kohlenstoff, Mangan, Vanadium und Titan, beigegeben werden. Zur Dämpfung und Kühlung sind dem aluminothermischen Gemisch ferner Eisen bzw. Stahlschrott untermischt, wodurch gleichzeitig die Stahlausbeute erhöht wird.

Die vorzugsweise verwendeten Schienenstähle mit Zugfestigkeiten von 690 bis 880 N/mm² weisen Kohlenstoffgehalte von 0,4 bis 0,82 % und Mangangehalte von 0,8 bis 1,7 % und ein dementsprechend vorwiegend perlitisch ausgebildetes Gefüge auf.

Gemäß DE-C-36 44 106 wird ein aluminothermisches Gemisch bereitgestellt, welches die Erzeugung eines Schweißgutes mit erhöhter Reproduzierbarkeit der Zusammensetzung gewährleistet. Hierdurch soll insbesondere erreicht werden, daß das Gefüge des Schweißgutes dem Gefüge des Schienenwerkstoffes entspricht.

In diesem aluminothermischen Gemisch sind Zusatzstoffe in Form eines homogenen Granulates enthalten, insbesondere Legierungsmetalle, wie z. B. Mn, Cr, Ni, V, Ti, die in reiner Form oder als Legierungen, z. B. mit Fe eingesetzt werden können, Dämpfungsmittel, wie z. B. Fe oder Fe-Legierungen, sowie Aufkohlungsmittel, wie Kohlenstoff oder C enthaltende Metalle, Legierungen oder Carbide.

Zur Verschweißung von Schienen wird dem Gemisch ein Granulat, bestehend aus Kohlenstoff, Mangan und Eisen, in einer Menge zugesetzt, welche die Ausbildung eines perlitischen Gefüges in dem aluminothermisch erzeugten Stahl gewährleistet. Vorzugsweise besteht das Granulat aus 1,5 bis 3 Gew.-% Kohlenstoff, 8 bis 12 Gew.-% Mangan und 85 bis 90,5 Gew.-% Eisen. Teilweise werden Mangangehalte bis zu 80 % eingesetzt.

Der Erfindung liegt die Aufgabe zugrunde, ein aluminothermisches Gemisch bereitzustellen, welches ein ruhigeres Reaktionsverhalten mit reduzierter Rauchentwicklung aufweist, eine verbesserte Morphologie der Schweißungsoberfläche bewirkt und den steigenden Anforderungen einer verschleißfesteren Schweißung genügt. Daneben sollte die Zuverlässigkeit der Schweißung weiter erhöht werden.

Der Erfindung liegt insbesondere die Aufgabe zugrunde, die Verkehrssicherheit der aluminothermisch erzeugten Schweißstelle noch weiter zu erhöhen.

Das erfindungsgemäße aluminothermische Gemisch setzt sich somit aus einer feinteiligen Basisportion aus Eisenoxiden und Aluminium sowie metallischen Zuschlägen zusammen, welches dadurch gekennzeichnet ist, daß als metallischer Zuschlag eine Vorlegierung, nämlich eine Ferro-Chrom-Legierung, die aus (in Gew.-%)

| | |
|---|---|
| C: | 0,1 bis 20 |
| Si: | 2 bis 40 |
| Cr: | 5 bis 80 |

und Eisen mit herstellungsbedingten Verunreinigungen besteht, in einer Menge von 5 bis 50 Gew.-% bezogen auf die Basisportion zugesetzt wird.

Weitere vorteilhafte Ausgestaltungen des aluminothermischen Gemisches ergeben sich aus den unterschiedlich angegebenen Gewichtsanteilen der Vorlegierung und der zuzusetzenden Mengen.

Bei der Bemessung der Zuschlagsstoffe ist zu beachten, daß sowohl dem durch die aluminothermische Reaktion bedingten Abbrand der Legierungselemente als auch der zusätzlichen Legierung des aus Eisen bestehenden Dämpfungsanteiles Rechnung getragen wird. Dabei muß die für die Schweißung erforderliche Gießtemperatur des aluminothermisch erzeugten Stahles gewährleistet sein. Das Verhältnis der Zuschlagsstoffe zueinander, die Menge an dämpfendem Eisen im aluminothermischen Gemisch sowie die benötigte Gesamtmenge an Zuschlägen lassen sich durch einfache Vorversuche ermitteln. Dies ist dem Fachmann ohne weiteres erfinderisches Zutun möglich.

Die Menge an Zuschlagsstoffen richtet sich einerseits nach der Zusammensetzung der Vorlegierung und andererseits nach den Konzentrationen an Legierungsstoffen in der Schweißung.

Je höher die Härte der Schweißung sein soll, desto mehr Legierungselemente werden benötigt, d. h. desto mehr Vorlegierung muß verwendet werden und desto mehr Legierungselemente müssen bereits in der Vorlegierung vorhanden sein.

Bei Einsatz einer Vorlegierung mit z. B. hohen Cr-Gehalten von beispielsweise bis zu 80 oder sogar 90 % sind die sonstigen Legierungselemente Si und C entsprechend anzupassen und für eine gewünschte Härte entsprechend weniger an Vorlegierung einzusetzen. Dies läßt sich leicht durch entsprechendes Erschmelzen von Vorlegierungen unterschiedlicher Zusammensetzung und anschließenden Schweißversuchen ermitteln.

Bei Verwendung von Vorlegierungen mit geringeren Cr-Gehalten muß mehr an Vorlegierung eingesetzt werden.

Die Vorlegierung kann dabei zusätzlich kornfeinende Elemente, wie Bor, Vanadium, Titan, Niob oder Seltenerdmetalle, enthalten oder auch mit Metallen, wie Nickel, Molybdän, Kupfer oder Wolfram und anderen gewünschten Zusätzen legiert sein.

Kornfeinende Bestandteile und die Seltenenerden werden üblicherweise in einer Menge zugesetzt, die einen Gehalt von < 1 % in der Schweißung bewirken.

Die anderen möglichen Legierungszusätze werden der Vorlegierung in der Menge zugegeben, so daß in der Schweißung diese Legierungselemente in einer Menge von bis zu 4 % vorliegen.

Die Basisportion besteht üblicherweise aus etwa 25 % Aluminium und 75 % Eisenoxid, wobei verschiedene Oxidationsstufen des Eisenoxids vorliegen.

Wie oben ausgeführt, sind die heute vorzugsweise verwendeten Schienenstähle durch Kohlenstoffgehalte von 0,4 bis 0,82 Gew.-% und Mangangehalte von 0,8 bis 1,7 Gew.-% gekennzeichnet und weisen dementsprechend vorwiegend perlitisches Gefüge mit lamellarem Ferrit und Zementit (Fe₃C) auf.

Soll das erfindungsgemäße Gemisch zur Verschweißung derartiger Schienen verwendet werden, sollen die metallischen Zuschläge in einer Menge enthalten sein, welche die Ausbildung eines überwiegend perlitischen Gefüges in dem aluminothermisch erzeugten Stahl gewährleisten.

Es ist mit diesem Gemisch auch möglich, Gefüge mit bainitischen Anteilen einzustellen. Daneben werden dann die sehr feinen Perlitstufen Troostit und Sorbit beobachtet.

Vorzugsweise werden aluminothermische Gemische eingesetzt, bei denen die metallischen Zuschläge aus Reineisen und einer entsprechenden Vorlegierung bestehen. Hier hat sich der Zusatz in einer Menge von 5 bis 35 Gewichtsteilen, bezogen auf 100 Gewichtsteile Basisportion, bewährt, wobei 10 bis 30 % Reineisen und 5 bis 30 % Vorlegierung verwendet werden.

Besonders bevorzugt wird ein aluminothermisches Gemisch, bei dem als metallische Zuschläge 5 bis 15 Gew.-% Vorlegierung und 5 bis 20 Gew.-% Eisen, jeweils bezogen auf die Basisportion, zugesetzt sind.

In diesem Fall weist die Vorlegierung zur Erreichung von Härten zwischen 150 und über 400 HB im Schweißgut, gemessen auf der Fahrfläche, eine Zusammensetzung von (in Gew.-%)

| | |
|---|---|
| C: | 0,5 bis 8 |
| Si: | 5 bis 20 |
| Cr: | 10 bis 60 |

und Eisen mit herstellungsbedingten Verunreinigungen auf, vorzugsweise

| | |
|---|---|
| C: | 1,0 bis 6,0 |
| Si: | 10 bis 15 |
| Cr: | 15 bis 50 |

und Eisen mit herstellungsbedingten Verunreinigungen.

Als besonders vorteilhaft hat sich weiterhin eine Vorlegierung bewährt, die aus (in Gew.-%):

| | |
|---|---|
| C: | 0,1 bis 20 |
| Cr: | 5 bis 80 |

und Eisen mit herstellungsbedingten Verunreinigungen besteht, und die in einer Menge von 5 bis 50 Gew.-% bezogen auf die Basisportion zugesetzt wird.

Die Tabellen 1 bis 3 zeigen beispielhaft, wie Schweißportionen für vier verschiedene Härteklassen der Thermit-Schweißung hergestellt werden können.

Tabelle 1 zeigt eine Grundrezeptur.

**Tabelle 1**

| Rezeptur für die Schweißportionen Basisportion : Reinthermit (RT) | |
|---|---|
| | in % |
| Aluminium | 25,0 |
| Fe-Oxid | 75,0 |
| Summe RT | 100,0 |

| Zuschläge: | |
|---|---|
| Reineisen | 12,5 |
| Vorlegierung | 7,5 |
| Summe der Schweißmasse | 120,0 |

In Tabelle 2 sind die bevorzugten Bereiche für Zusammensetzungen der eingesetzten Vorlegierungen für unterschiedlich angestrebte Härtegrade der Schweißung aufgeführt.

**Tabelle 2**

| Zusammensetzungen der Vorlegierungen | | | | |
|---|---|---|---|---|
| Härte (HB) | 250 - 300 | 300 - 350 | 350 - 400 | >400 |

| Vorlegierung (%) | | | | |
|---|---|---|---|---|
| Cr | 28-31 | 33-36 | 34-37 | 38-41 |
| Si | 10-15 | 10-15 | 10-15 | 10-15 |
| C | 1,5-2,0 | 2,0-2,7 | 3,3-4,0 | 4,0-4,5 |
| Rest Fe | ad 100 | ad 100 | ad 100 | ad 100 |

Tabelle 3 zeigt die Analysenwerte der Schweißungen, die mit den Schweißportionen gemäß Tabelle 2 vorgenommen werden. Die festgestellten Mn-Konzentrationen sind Verunreinigungen, die aus aufgelöstem Schienenstahl stammen.

**Tabelle 3**

| Analyse der Schweißungen auf der Fahrfläche | | | | | | |
|---|---|---|---|---|---|---|
| | C % | Al % | Cr % | Mn % | Ni % | Si % |
| Härteklasse 250-300 | 0,1-0,3 | <0,5 | 1,6-2,4 | <0,5 | <0,2 | 0,5-1,5 |
| Härteklasse 300-350 | 0,15-0,35 | <0,5 | 2,0-2,8 | <0,5 | <0,2 | 0,5-1,5 |
| Härteklasse 350-400 | 0,25-0,45 | <0,5 | 2,2-3,0 | <0,5 | <0,2 | 0,5-1,5 |
| Härteklasse >400 | 0,35-0,55 | <0,5 | 2,4-3,2 | <0,5 | <0,2 | 0,5-1,5 |

Die mengenmäßigen Zugaben zur Erzielung der gewünschten chemischen Zusammensetzung des Schweißgutes sind für jeden Fall durch einen Schweißversuch leicht zu ermitteln.

Das erfindungsgemäße aluminothermische Gemisch ermöglicht damit die Erzeugung eines Schweißgutes für die aluminothermische Schienenschweißung, das in seiner chemischen Zusammensetzung und Gefügeausbildung sowie in der Härte den verschiedenen, zu verschweißenden Schienenstählen entspricht, wodurch insbesondere ein gleichmäßiges Verschleißverhalten von Schweißgut und Schienenwerkstoff und damit ein störungs- und wartungsfreies Gleis gewährleistet wird. Darüber hinaus wird ermöglicht, ein perlitisches Gefüge einzustellen, bestehend aus Troostit-/ Sorbitanteilen, in Verbindung mit einer körnigen Morphologie der oberen Zwischenstufe. Eine solche Gefügestruktur zeichnet sich aufgrund der Feinkörnigkeit durch eine verbesserte Verschleißfestigkeit aus. Die Verwendung des Granulates weist entsprechend der Forderung ein gleichmäßiges, raucharmes und beruhigtes Reaktionsverhalten mit einer gleichbleibenden Schweißqualität auf. Der Vorteil der erfindungsgemäßen aluminothermischen Gemische besteht, verglichen mit einem Schweißgemisch des Standes der Technik, in der Vermeidung von Zusatzstoffen, die verstärkt zur Bildung von Rauch und zur Erhöhung der Reaktivität führen. Diese gleichmäßigere und ruhigere metallothermische Reaktion ist nicht nur metallurgisch von Bedeutung, sondern vermindert auch die Belastung des Schweißpersonals durch herausspritzende Teilchen des Schmelzgutes sowie durch aus dem reagierenden Gemisch austretende Dämpfe, welche insbesondere bei Schweißarbeiten in Tunnels oder U-Bahnen stören.

Ein weiterer Vorteil besteht in dem weiteren Spektrum einstellbarer Härten und dem verbesserten Verschleißverhalten.

## Patentansprüche

1. Aluminothermisches Gemisch aus einer feinteiligen Basisportion aus Eisenoxiden und Aluminium sowie metallischen Zuschlägen, dadurch gekennzeichnet, daß als metallischer Zuschlag eine Vorlegierung, nämlich eine Ferro-Chrom-Legierung, die aus (in Gew.-%)
| | |
|---|---|
| C: | 0,1 bis 20 |
| Si: | 2 bis 40 |
| Cr: | 5 bis 80 |
und Eisen mit herstellungsbedingten Verunreinigungen besteht, in einer Menge von 5 bis 50 Gew.-% bezogen auf die Basisportion zugesetzt wird.

2. Aluminothermisches Gemisch nach Anspruch 1, dadurch gekennzeichnet, daß die Vorlegierung in einer Menge von 10 bis 40 Gew.-%, bezogen auf die Basisportion, zugesetzt wird.

3. Aluminothermisches Gemisch nach Anspruch 1, dadurch gekennzeichnet, daß die Vorlegierung in einer Menge von 15 bis 30 Gew.-%, bezogen auf die Basisportion, zugesetzt wird.

4. Aluminothermisches Gemisch nach Anspruch 1 bis 3, dadurch gekennzeichnet, daß als Vorlegierung eine Ferro-Chrom-Legierung verwendet wird, die aus (in Gew.-%)
| | |
|---|---|
| C: | 0,5 bis 8 |
| Si: | 5 bis 20 |
| Cr: | 10 bis 60 |
und Eisen mit herstellungsbedingten Verunreinigungen besteht.

5. Aluminothermisches Gemisch nach Anspruch 1 bis 3, dadurch gekennzeichnet, daß als Vorlegierung eine Ferro-Chrom-Legierung verwendet wird, die aus (in Gew.-%)
| | |
|---|---|
| C: | 1,0 bis 6,0 |
| Si: | 10 bis 15 |
| Cr: | 15 bis 50 |
und Eisen mit herstellungsbedingten Verunreinigungen besteht.

6. Aluminothermisches Gemisch nach Anspruch 1 bis 5, dadurch gekennzeichnet, daß neben der Vorlegierung als metallischer Zusatz Reineisen eingesetzt wird.

7. Aluminothermisches Gemisch nach Anspruch 1 bis 6, dadurch gekennzeichnet, daß als metallische Zuschläge 5 bis 45 Gew.-% Vorlegierung und 5 bis 45 Gew.-% Reineisen, jeweils bezogen auf die Basisportion, zugesetzt werden.

8. Aluminothermisches Gemisch nach Anspruch 1 bis 6, dadurch gekennzeichnet, daß als metallische Zuschläge 5 bis 30 Gew.-% Vorlegierung und 10 bis 30 Gew.-% Reineisen, jeweils bezogen auf die Basisportion, zugesetzt werden.

9. Aluminothermisches Gemisch nach Anspruch 1 bis 6, dadurch gekennzeichnet, daß als metallische Zuschläge 5 bis 15 Gew.-% Vorlegierung und 5 bis 20 Gew.-% Reineisen, jeweils bezogen auf die Basisportion, zugesetzt werden.

10. Aluminothermisches Gemisch in Abänderung zu Anspruch 1, dadurch gekennzeichnet, daß als metallischer Zuschlag eine Vorlegierung, nämlich eine Ferro-Chrom-Legierung, die aus (in Gew.-%)
| | |
|---|---|
| C: | 0,1 bis 20 |
| Cr: | 5 bis 80 |
und Eisen mit herstellungsbedingten Verunreinigungen besteht, in einer Menge von 5 bis 50 Gew.-% bezogen auf die Basisportion zugesetzt wird.
